# EUROPÄISCHE PATENTSCHRIFT

(11) **EP 4 344 599 B1**
(45) Veröffentlichungstag und Bekanntmachung des Hinweises auf die Patenterteilung: **02.04.2025**
(21) Anmeldenummer: 23198495.6
(22) Anmeldetag: 20.09.2023
(51) Int. Cl.: A47L 15/24, A47L 15/42, A47L 15/00

(54) **TRANSPORTSPÜLMASCHINE SOWIE VERFAHREN ZUM BETREIBEN EINER TRANSPORTSPÜLMASCHINE**
CONVEYOR DISHWASHER AND METHOD FOR OPERATING A CONVEYOR DISHWASHER
LAVE-VAISSELLE À TRANSPORTEUR ET PROCÉDÉ DE FONCTIONNEMENT D'UN LAVE-VAISSELLE À TRANSPORTEUR

(30) Priorität: 28.09.2022 DE 102022125000
(43) Veröffentlichungstag der Anmeldung: 03.04.2024
(73) Patentinhaber: Illinois Tool Works Inc., Glenview IL 60025 (US)
(72) Erfinder: SCHREMPP, Martin, Glenview, Illinois, 60025 (US); DISCH, Harald, Glenview, Illinois, 60025 (US)
(74) Vertreter: Meissner Bolte Partnerschaft mbB

(56) Entgegenhaltungen:
- WO-A1-2010/019380
- WO-A1-2015/121469
- WO-A1-2022/093556
- DE-A1- 102013 226 080

## Beschreibung

Die vorliegende Erfindung betrifft allgemein das Fachgebiet des gewerblichen Spülens und insbesondere eine Transportspülmaschine, insbesondere eine Transportspülmaschine nach dem Oberbegriff des unabhängigen Patentanspruchs 1, sowie ein Verfahren zum Betreiben einer solchen Transportspülmaschine.

Demgemäß betrifft die Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone.

Die Druckschrift WO 2015/121469 A1 betrifft eine Reinigungsvorrichtung zum Reinigen von Reinigungsgut. Die Reinigungsvorrichtung umfasst mindestens eine Reinigungskammer und mindestens eine Transportvorrichtung, wobei die Transportvorrichtung eingerichtet ist, um das Reinigungsgut in einer Transportrichtung durch die Reinigungskammer zu transportieren. Die Reinigungsvorrichtung weist mindestens ein Düsensystem zur Beaufschlagung des Reinigungsguts mit mindestens einem Reinigungsfluid auf. Weiterhin weist die Reinigungsvorrichtung mindestens einen Reinigungsgut-Sensor auf, welcher eingerichtet ist, um eine Beladung der Transportvorrichtung mit Reinigungsgut zu erkennen.

Die Druckschrift WO 2022/093556 A1 betrifft eine Transportspülmaschine gemäß dem Oberbegriff des unabhängigen Patentanspruches 1.

Eine weitere Transportspülmaschine ist aus der Druckschrift WO 2010/019380 A1 bekannt.

Die Druckschrift DE 10 2013 226 080 A1 betrifft eine Reinigungsvorrichtung zum Reinigen von Reinigungsgut.

Die Transportspülmaschine kann insbesondere als Bandtransportspülmaschine oder als Korbtransportspülmaschine ausgeführt sein.

Bei Transportspülmaschinen wird das Spülgut, wie beispielsweise Geschirr, Töpfe, Gläser, Besteck und andere zu reinigende Utensilien, durch mehrere Behandlungszonen, wie zum Beispiel mindestens eine Vorwaschzone, mindestens eine Hauptwaschzone, mindestens eine Nachwasch- bzw. Vorspülzone, mindestens eine Frischwasser-Klarspülzone und mindestens eine Trocknungszone, gefördert. Unterschiedliche Spülgutarten allerdings verlangen aufgrund ihrer Gebrauchsanwendung, ihres Verschmutzungsgrads, ihrer Form, sowie aufgrund des eingesetzten Materials unterschiedliche Behandlungsparameter für die einzelnen Prozessschritte. Bei heutigen Transportspülmaschinen wird häufig keine automatische Differenzierung der Spülgutarten vorgenommen, so dass die herkömmlichen Systeme oftmals als Kompromiss so ausgelegt sind, dass sie für mehrere unterschiedliche Spülgutarten verwendbar sind.

Allerdings ist beispielsweise aus der Druckschrift DE 10 2020 128 333 A1 eine Transportspülmaschine bekannt, die über eine gewisse "Intelligenz" verfügt, da die aus diesem Stand der Technik bekannte Transportspülmaschine eine Einrichtung zur automatischen Detektion und Erkennung von Spülgutarten aufweist.

Andererseits ist beispielsweise aus der Druckschrift DE 10 2008 037 344 A1 eine Transportspülmaschine bekannt, welche eine Spülgutsensorvorrichtung aufweist, um leere Fächer der eine Vielzahl von Fächern aufweisenden Transportvorrichtung zu detektieren.

Problematisch der aus dem Stand der Technik bekannten Ansätze ist, dass eine Transportspülmaschine während einer Spülschicht, wie beispielsweise während eines Spültags, in der Regel kontinuierlich betrieben wird. Das Spülpersonal belädt die Transportvorrichtung der Transportspülmaschine mit Spülgut, wie es derzeit in der Spülküche anfällt. Da über eine Spülschicht bzw. über einen Spültag gesehen die pro Zeiteinheit anfallende Menge an Spülgut stark variiert, kann häufig nicht vermieden werden, dass die Transportspülmaschine nur teilweise beladen betrieben wird.

Zwar ist beispielsweise aus der bereits genannten Druckschrift DE 10 2008 037 344 A1 allgemein bekannt, leere Fächer der Transportvorrichtung zu detektieren, allerdings eignen sich die für den Betrieb der Transportspülmaschine nicht, um einen möglichst effizienten Betrieb der Transportspülmaschine über eine längere Zeitdauer zu garantieren. In dem genannten Stand der Technik ist vorgesehen, dass in Abhängigkeit von der Detektion von leeren Fächern die pro Zeiteinheit in der mindestens einen Klarspülzone versprühte Klarspülflüssigkeit eingestellt wird. Dies mag im Einzelfall Ressourcen (Energie, Wasser und Chemie) einsparen, allerdings ist über einen längeren Zeitraum gesehen das automatische Einstellen der pro Zeiteinheit in der mindestens einen Klarspülzone versprühte Menge an Klarspülflüssigkeit nicht geeignet, um effizient den Betrieb der Transportspülmaschine zu optimieren.

Ausgehend von dieser Problemstellung liegt somit der vorliegenden Erfindung die Aufgabe zu Grunde, eine Transportspülmaschine der eingangs genannten Art dahingehend weiterzubilden, dass diese trotz eines kontinuierlichen Betriebs während einer Spülschicht möglichst effizient betrieben werden kann. Des Weiteren soll ein entsprechendes Verfahren zum Betreiben einer solchen Transportspülmaschine angegeben werden.

Im Hinblick auf die Transportspülmaschine wird die der Erfindung zu Grunde liegende Aufgabe durch den Gegenstand des unabhängigen Patentanspruchs 1 gelöst, wobei vorteilhafte Weiterbildungen der erfindungsgemäßen Transportspülmaschine in den abhängigen Ansprüchen 1 bis 8 angegeben sind.

Im Hinblick auf das Verfahren wird die der Erfindung zu Grunde liegende Aufgabe durch den unabhängigen Patentanspruch 9 gelöst, wobei vorteilhafte Weiterbildungen des Betriebsverfahrens in den abhängigen Ansprüchen 10 und 11 angegeben sind.

Demgemäß betrifft die vorliegende Erfindung insbesondere eine Transportspülmaschine zum Reinigen von Spülgut, wobei die Transportspülmaschine mindestens eine Waschzone und mindestens eine Klarspülzone sowie eine Transportvorrichtung aufweist zum Transportieren von Spülgut durch die mindestens eine Waschzone und die mindestens eine Klarspülzone. Die erfindungsgemäße Transportspülmaschine weist ferner eine Einrichtung zum Erfassen einer Beladung der Transportvorrichtung auf. Diese Einrichtung zum Erfassen einer Beladung der Transportvorrichtung ist ausgebildet, vorzugsweise kontinuierlich oder zu vorab festgelegten Zeiten und/oder Ereignissen eine Beladung der Transportvorrichtung mit durch die Behandlungszonen der Transportspülmaschine zu transportierendem Spülgut zu ermitteln.

Erfindungsgemäß ist insbesondere vorgesehen, dass die Transportspülmaschine eine Steuereinrichtung aufweist, welche ausgebildet ist, insbesondere während einer Lern- oder Beobachtungsphase über mindestens einen Beobachtungszeitraum und vorzugsweise über mehrere Beobachtungszeiträume, die jeweils vorzugsweise eine Spülschicht oder einen Spültag der Transportspülmaschine oder einen Zeitabschnitt hiervon betreffen, eine zeitliche Entwicklung der Beladung der Transportvorrichtung mit durch die Behandlungszonen der Transportspülmaschine zu transportierendem Spülgut zu ermitteln. Vorzugsweise ist die Steuereinrichtung ferner ausgebildet ist, anhand der ermittelten zeitlichen Entwicklung der Beladung der Transportvorrichtung ein Muster oder eine Gesetzmäßigkeit abzuleiten.

Demgemäß weist die erfindungsgemäße Transportspülmaschine eine gewisse "Intelligenz" auf, da mit Hilfe der Steuereinrichtung bzw. mit Hilfe der Einrichtung zum Erfassen einer Beladung der Transportvorrichtung künstlich Wissen aus Erfahrung generiert wird. Die Steuereinrichtung lernt aus Beispielen während der Lern- oder Beobachtungsphase und kann diese nach Beendigung der Lernphase verallgemeinern. Dazu bauen Algorithmen der Steuereinrichtung beim maschinellen Lernen ein statistisches Modell auf, welches auf Trainingsdaten beruht, die insbesondere während der Lern- oder Beobachtungsphase generiert wurden. Diese Trainingsdaten werden nach Beendigung der Lern- oder Beobachtungsphase vorzugsweise kontinuierlich gegen neue Daten (Testdaten) getestet. Mit anderen Worten, die Steuereinrichtung der erfindungsgemäßen Transportspülmaschine lernt nicht einfach die während der Lern- oder Beobachtungsphase gewonnenen Beispiele auswendig, sondern erkennt vorzugsweise Muster und Gesetzmäßigkeiten in den Lerndaten.

Dies ermöglicht es, dass nach einem gewissen Einlernvorgang während der Lern- oder Beobachtungsphase die erfindungsgemäße Transportspülmaschine optimal an die jeweilige Anwendung angepasst oder anpassbar ist. Insbesondere ist die Steuereinrichtung ausgebildet, kontinuierlich das Wasch-/Spülverhalten des der Transportspülmaschine zugeordneten Spülpersonals oder des Betreibers der Transportspülmaschine zu analysieren, um als Reaktion hiervon entweder Prozessparameter der Transportspülmaschine automatisch einzustellen, oder um dem Spülpersonal oder dem Betreiber der Transportspülmaschine Empfehlungen für einen möglichst effizienten Betrieb der Transportspülmaschine zu geben.

So ist bei der erfindungsgemäßen Transportspülmaschine vorgesehen, dass die Steuereinrichtung ferner ausgebildet ist, den Beobachtungszeitraum, der - wie bereits gesagt - vorzugsweise eine Spülschicht oder einen Spültag der Transportspülmaschine oder einen Zeitabschnitt hiervon betrifft, in einen ersten Unterzeitraum und in mindestens einen weiteren, zweiten Unterzeitraum einzuteilen. In dem ersten Unterzeitraum des Beobachtungszeitraums entspricht der ermittelte, insbesondere mittlere Beladungsgrad der Transportvorrichtung einem ersten relativen Wert bzw. er fällt in einen ersten relativen Wertebereich. In dem mindestens einen zweiten Unterzeitraum des Beobachtungszeitraums hingegen entspricht der ermittelte, insbesondere mittlere Beladungsgrad der Transportvorrichtung einem zweiten relativen Wert bzw. fällt in einen zweiten relativen Wertebereich.

Dabei ist vorgesehen, dass der erste relative Wert des insbesondere mittleren Beladungsgrads der Transportvorrichtung einer verbleibenden Beladungskapazität der Transportvorrichtung entspricht, die größer ist als die verbleibende Beladungskapazität der Transportvorrichtung, die dem zweiten relativen Wert des insbesondere mittleren Beladungsgrads der Transportvorrichtung entspricht.

Ferner ist es beispielsweise denkbar, dass der erste Unterzeitraum einer Zeitperiode am Vormittag entspricht, da vormittags in der Regel nur wenig mit der Transportspülmaschine zu reinigendes Spülgut anfällt. Der zweite Unterzeitraum kann beispielsweise einer Zeitperiode um die Mittagszeit entsprechen, in welcher erfahrungsgemäß deutlich mehr Spülgut anfällt.

Selbstverständlich kommen aber auch andere Zeitfenster für den ersten und den mindestens einen weiteren, zweiten Unterzeitraum in Frage.

Gemäß der Erfindung ist ferner vorgesehen, dass die Steuereinrichtung ferner ausgebildet ist, insbesondere nach Beendigung der Lern- oder Beobachtungsphase vorzugsweise automatisch und noch bevorzugter wahlweise automatisch während des Betriebs der Transportspülmaschine während einer Spülschicht oder während eines Spültags für den ersten Unterzeitraum mindestens eine erste, die Behandlung des Spülguts in den Behandlungszonen der Transportspülmaschine beeinfließende Maßnahme und/oder mindestens eine die Güte einer in der mindestens einen Waschzone der Transportspülmaschine zu versprühenden Waschflüssigkeit beeinfließende Maßnahme ggf. zeitlich verzögert zu initiieren. In gleicher Weise ist es denkbar, dass die Steuereinrichtung ferner ausgebildet ist, für den mindestens einen zweiten Unterzeitraum mindestens eine zweite, die Behandlung des Spülguts in den Behandlungszonen der Transportspülmaschine beeinfließende Maßnahme und/oder mindestens eine zweite die Güte einer in der mindestens einen Waschzone der Transportspülmaschine zu versprühenden Waschflüssigkeit beeinfließende Maßnahme ggf. zeitlich verzögert zu initiieren.

Mit anderen Worten, verfügt die erfindungsgemäße Transportspülmaschine über eine gewisse Intelligenz, da die der Transportspülmaschine zugeordnete Steuereinrichtung anhand der zuvor ermittelten Lerndaten weiß, zu welchen Zeiträumen während eines Spültags bzw. einer Spülschicht der Transportspülmaschine viel Spülgut anfällt. Mit dieser Kenntnis kann die Spülmaschine vorab bereits die Behandlungsparameter der Spülmaschine entsprechend anpassen bzw. die Güte der in der mindestens einen Waschzone der Transportspülmaschine zu versprühenden Waschflüssigkeit anpassen.

Beispielsweise kann die die Behandlung des Spülguts in den Behandlungszonen der Transportspülmaschine beeinfließende Maßnahme mindestens eine der nachfolgend aufgeführten Maßnahmen sein:
▪ Erhöhen oder Verringern der Temperatur der in der mindestens einen Klarspülzone zu versprühenden Klarspülflüssigkeit; und/oder
▪ Erhöhen oder Verringern des Drucks der in der mindestens einen Klarspülzone zu versprühenden Klarspülflüssigkeit; und/oder
▪ Erhöhen oder Verringern der pro Zeiteinheit in der mindestens einen Klarspülzone versprühten Menge an Klarspülflüssigkeit; und/oder
▪ Erhöhen oder Verringern der Temperatur der in der mindestens einen Waschzone zu versprühenden Waschflüssigkeit; und/oder
▪ Erhöhen oder Verringern des Drucks der in der mindestens einen Waschzone zu versprühenden Waschflüssigkeit; und/oder
▪ Erhöhen oder Verringern der pro Zeiteinheit in der mindestens einen Waschzone versprühten Menge an Waschflüssigkeit; und/oder
▪ Erhöhen oder Verringern des Drucks der in einer optionalen Trocknungszone zu versprühenden Trocknungsluft; und/oder
▪ Erhöhen oder Verringern der Temperatur der in einer optionalen Trocknungszone zu versprühenden Trocknungsluft; und/oder
▪ Erhöhen oder Verringern der pro Zeiteinheit in einer optionalen Trocknungszone versprühten Menge an Trocknungsluft; und/oder
▪ Erhöhen oder Verringern der Transportgeschwindigkeit der Transportvorrichtung.

Beispielsweise ist es somit denkbar, dass während einer Zeitperiode, in welcher nur eine geringe Beladung der Transportvorrichtung auftritt bzw. erwartet wird, die Steuereinrichtung automatisch die Transportgeschwindigkeit der Transportvorrichtung verringert. Auf diese Weise werden die Kontaktzeiten des zu reinigenden Spülguts in den Behandlungszonen der Transportspülmaschine erhöht. Dies wiederum ermöglicht es, dass die Temperatur und/oder Mechanik und/oder die pro Zeiteinheit in den entsprechenden Behandlungszonen zu versprühenden Flüssigkeitsmengen reduziert werden kann, ohne dass dies einen negativen Einfluss auf das Wasch- bzw. Spülergebnis hat. Allerdings können mit diesen Maßnahmen erheblich Ressourcen während des Betriebs der Transportspülmaschine eingespart werden.

Wie bereits ausgeführt, ist es denkbar, dass die Steuereinrichtung abhängig von dem gewählten Unterzeitraum auch die Güte der in der mindestens einen Waschzone der Transportspülmaschine zu versprühenden Waschflüssigkeit einstellt. Denkbar in diesem Zusammenhang ist es, dass die die Güte der in der mindestens einen Waschzone der Transportspülmaschine zu versprühenden Waschflüssigkeit beeinfließende Maßnahme mindestens eine der nachfolgend aufgeführten Maßnahmen ist:
▪ Erhöhen oder Verringern einer Regeneration der in der mindestens einen Waschzone der Transportspülmaschine zu versprühenden Waschflüssigkeit;
▪ Erhöhen oder Verringern eines Schmutzaustragevermögens der in der mindestens einen Waschzone zu versprühenden Waschflüssigkeit; und/oder
▪ Aktivieren oder Deaktivieren eines Schmutzaustrags aus der in der mindestens einen Waschzone zu versprühenden Waschflüssigkeit.

Die Regeneration der Waschflüssigkeit geschieht während des Wasch- bzw. Spülprozesses durch das zulaufende Wasser meist aus der in Transportrichtung des Spülguts gesehen vorgeschalteten Frischwasser-Klarspülung.

Unter dem Begriff "Schmutztragevermögen" ist im gewerblichen Spülen die Fähigkeit einer Reinigerlösung, beispielsweise die Fähigkeit der in der mindestens einen Waschzone zu versprühenden Waschflüssigkeit, Speisereste so zu dispergieren oder zu emulgieren, dass sie sich nicht wieder auf schon gereinigte Spülgutoberflächen absetzen können. Das Schmutztragevermögen lässt sich insbesondere durch die Konzentration der Reinigerchemikalie in der Reinigerlösung einstellen.

Andererseits beeinflusst die Schmutzbelastung der Reinigerlösung bzw. Waschflüssigkeit das Reinigungsergebnis sowie die Schaumbildung. Die Schmutzbelastung ist die Gesamtheit aller Schmutzbestandteile, leicht- bzw. schwerlöslicher, emulgier- bzw. dispergierbarer Verunreinigungen der Reinigerlösung bzw. Waschflüssigkeit.

Die Schmutzbelastung der Waschflüssigkeit kann insbesondere durch einen Schmutzaustrag beeinflusst werden.

Demgemäß weist die erfindungsgemäße Transportspülmaschine gemäß Weiterbildungen des zuletzt genannten Aspekts eine Einrichtung zum vorzugsweise automatischen Schmutzaustrag aus der in der mindestens einen Waschzone zu versprühenden Waschflüssigkeit auf.

Gemäß Realisierungen dieser Schmutzaustrag-Einrichtung ist vorgesehen, dass die mindestens eine Waschzone der Transportspülmaschine ein als Rezirkulationskreislauf ausgebildetes Waschsystem aufweist, wobei das Waschsystem ein Düsensystem mit mindestens einer Waschdüse zum Versprühen von Waschflüssigkeit auf das zu reinigende Spülgut, einen Waschtank zum Auffangen von zumindest einem Teil der versprühten Waschflüssigkeit und eine Waschpumpe zum Zuführen von in dem Waschtank gesammelter Waschflüssigkeit zu der mindestens einen Waschdüse aufweist.

Ferner ist ein dem mindestens einen Waschsystem zugeordnetes Schmutzaustragsystem vorgesehen. Dem Schmutzaustragsystem ist ein Tankabdecksieb zugeordnet, welches ausgebildet ist, um Schmutzpartikel von der versprühten und durch Schwerkraft in den Waschtank zurückfließenden Waschflüssigkeit abzutrennen. Das Schmutzaustragsystem weist ferner einen zumindest bereichsweise in dem Waschtank angeordneten Schmutzsammelbereich auf, der dazu dient, die mit Hilfe des Tankabdecksiebs von der Waschflüssigkeit abgetrennten Schmutzpartikel zu sammeln.

Ferner ist ein mit dem Schmutzsammelbereich strömungsmäßig verbundenes Schmutzaustragsystem vorgesehen, über welches der Schmutzsammelbereich insbesondere bedarfsweise geleert werden kann.

Bei dieser Ausgestaltung der erfindungsgemäßen Transportspülmaschine ist die Steuereinrichtung insbesondere ausgebildet, vorzugsweise automatisch und noch bevorzugter wahlweise automatisch in Abhängigkeit von dem ermittelten, insbesondere mittleren Beladungsgrad der Transportvorrichtung und ggf. zeitlich verzögert das Schmutzaustragsystem und insbesondere eine dem Schmutzaustragsystem zugeordnete Schmutzaustragpumpe zu aktivieren und/oder zu deaktivieren, um einen Schmutzaustrag aus der in der mindestens einen Waschzone zu versprühenden Waschflüssigkeit zu aktivieren oder zu deaktivieren, was die Güte der in der mindestens einen Waschzone der Transportspülmaschine zu versprühenden Waschflüssigkeit positiv beeinflusst.

Gemäß besonders leicht zu realisierenden aber dennoch effektiven Lösungen weist die Einrichtung zum Erfassen einer Beladung der Transportvorrichtung ein Kamerasystem auf, welches ober- oder unterhalb der oder seitlich zur Transportvorrichtung der Transportspülmaschine angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung aufzunehmen. Bei dieser Ausführungsvariante ist es bevorzugt, dass ferner eine Auswerteeinrichtung vorgesehen ist, welche ausgebildet ist, auszuwerten und zu ermitteln, ob zum Zeitpunkt der Bildaufnahme in dem Bereich der Transportvorrichtung spülgutfreie Bereiche vorhanden sind, und/oder wie der Beladungsgrad der Transportvorrichtung ist.

Gemäß einem weiteren Aspekt der vorliegenden Erfindung, welcher optional in Kombination mit den zuvor genannten Ausführungsvarianten realisiert sein kann, ist vorgesehen, dass die Transportspülmaschine eine Steuereinrichtung aufweist, welche ausgebildet ist, eine zeitliche Entwicklung der Beladung der Transportvorrichtung mit durch die Behandlungszonen der Transportspülmaschine zu transportierendem Spülgut zu ermitteln und/oder eine Statistik über den Beladungsgrad der Transportvorrichtung zu erstellen.

Denkbar in diesem Zusammenhang ist es insbesondere, dass die Steuereinrichtung ausgebildet ist, in Abhängigkeit von der ermittelten zeitlichen Entwicklung und/oder in Abhängigkeit von der erstellten Statistik eine entsprechende Meldung zu generieren und/oder an insbesondere den Betreiber der Transportspülmaschine auszugeben. Diese Meldung weist vorzugsweise eine Empfehlung für einen insbesondere im Hinblick auf die Reinigungseffizienz optimierten Betrieb der Transportspülmaschine auf.

Alternativ oder zusätzlich hierzu ist es denkbar, dass die Transportspülmaschine eine Steuereinrichtung aufweist, welche ausgebildet ist, eine Meldung, insbesondere Fehler- oder Warnmeldung, insbesondere an das der Transportspülmaschine zugeordnete Spülpersonal und/oder an den Betreiber der Transportspülmaschine auszugeben, wenn von der Einrichtung zum Erfassen einer Beladung der Transportvorrichtung ermittelt wird, dass ein aktueller oder - über eine insbesondere vorab festgelegte oder festlegbare Zeitperiode - gemittelter Beladungsgrad der Transportvorrichtung unterhalb eines vorab festgelegten oder festlegbaren Beladungsgrads der Transportvorrichtung liegt.

In Reaktion auf eine solche Meldung kann dann das Spülpersonal oder der Betreiber der Transportspülmaschine entsprechende Maßnahmen initiieren, wie beispielsweise die Transportgeschwindigkeit der Transportvorrichtung reduzieren.

Die der Erfindung zu Grunde liegende Aufgabe wird ferner durch ein Verfahren zum Betreiben einer Transportspülmaschine, insbesondere einer Transportspülmaschine der zuvor beschriebenen erfindungsgemäßen Art oder einer Transportspülmaschine nach dem Oberbegriff von Anspruch 1 gelöst. Bei dem Verfahren wird insbesondere während einer Beobachtungsphase über einen Beobachtungszeitraum, der vorzugsweise eine Spülschicht oder einen Spültag der Transportspülmaschine betrifft, eine zeitliche Entwicklung des von der Einrichtung zum Erfassen einer Beladung der Transportvorrichtung ermittelten Beladungsgrads der Transportvorrichtung ermittelt und anhand der ermittelten zeitlichen Entwicklung wird vorzugsweise ein Muster oder eine Gesetzmäßigkeit abgeleitet.

Alternativ oder zusätzlich hierzu ist bei dem erfindungsgemäßen Verfahren vorgesehen, dass insbesondere während einer Beobachtungsphase über einen Beobachtungszeitraum, der vorzugsweise eine Spülschicht oder einen Spültag der Transportspülmaschine betrifft, eine Statistik über die zeitliche Entwicklung des Beladungsgrads der Transportvorrichtung erstellt wird.

Gemäß Weiterbildungen des erfindungsgemäßen Verfahrens ist insbesondere vorgesehen, dass in Abhängigkeit von der ermittelten zeitlichen Entwicklung und/ oder in Abhängigkeit von der erstellen Statistik eine entsprechende Meldung generiert und/oder an insbesondere den Betreiber der Transportspülmaschine ausgegeben wird. Vorzugsweise enthält die Meldung eine Empfehlung für einen insbesondere im Hinblick auf die Reinigungseffizienz optimierten Betrieb der Transportspülmaschine.

Alternativ oder zusätzlich kann vorgesehen sein, dass eine Fehler- oder Warnmeldung insbesondere an das der Transportspülmaschine zugeordnete Spülpersonal und/oder an den Betreiber der Transportspülmaschine ausgegeben wird, wenn ermittelt wird, dass der ermittelte, insbesondere mittlere Beladungsgrad der Transportvorrichtung einen vorab festgelegten oder festlegbaren Beladungsgrad unterschreitet.

Im Folgenden wird die Erfindung mit Bezug auf die beiliegende Zeichnung anhand einer exemplarischen Ausführungsform der erfindungsgemäßen Transportspülmaschine beschrieben.

Es zeigt:

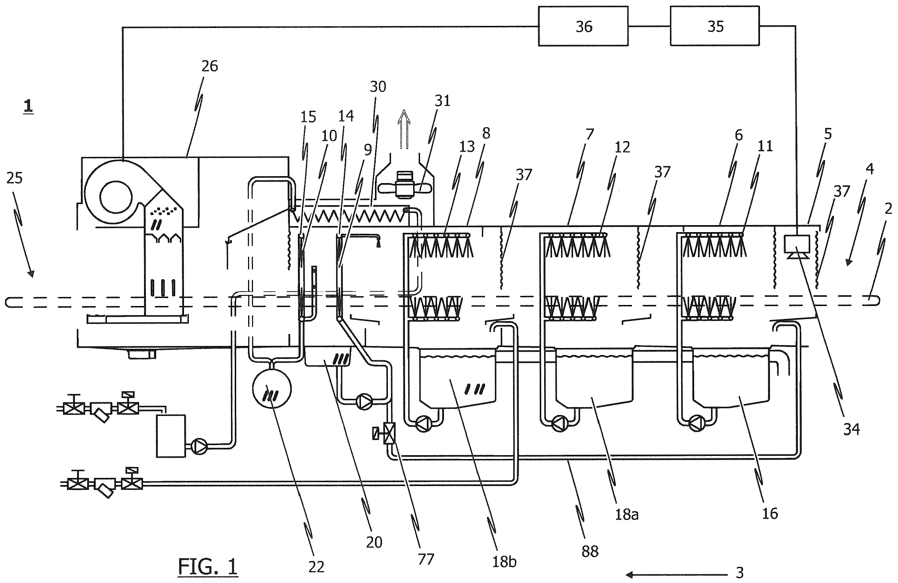

- FIG. 1: schematisch eine Längsschnittansicht einer Transportspülmaschine nach einer exemplarischen Ausführungsform der Erfindung.

FIG. 1 zeigt eine Transportspülmaschine 1 mit einer Transportvorrichtung 2 zum Transportieren von in den Zeichnungen nicht dargestelltem Spülgut in einer Transportrichtung 3 durch die Transportspülmaschine 1.

Als Transportvorrichtung 2 kommt beispielsweise ein Transportband in Frage, welches bevorzugt als mehrgliedriges Kunststofftransportband ausgebildet ist und durch einen in FIG. 1 nicht dargestellten vorzugsweise elektrischen Antrieb kontinuierlich angetrieben wird, so dass das auf das Transportband 2 aufgebrachte Spülgut durch die verschiedenen Behandlungszonen 6, 7, 8, 9, 10 und 26 der Transportspülmaschine 1 gemäß der Darstellung in FIG. 1 gefördert wird.

Üblicherweise wird das in Transportrichtung 3 transportierte Spülgut im Bereich des Einlaufes 4 auf die Transportvorrichtung bzw. das Transportband 2 aufgebracht. Entsprechend der durch den Pfeil angedeuteten Transportrichtung 3 wird dann das Spülgut vom Einlauf 4 in einen Einlauftunnel 5 transportiert.

Die Transportspülmaschine 1 gemäß der ersten Ausführungsform der vorliegenden Erfindung weist wenigstens eine Waschzone, beispielsweise wie in FIG. 1 dargestellt, eine Vorwaschzone 6, sowie eine erste Hauptwaschzone 7 und eine zweite Hauptwaschzone 8, welche in der Transportrichtung 3 gesehen nach der Vorwaschzone 6 angeordnet sind, auf.

In Transportrichtung 3 gesehen nach der wenigstens einen Waschzone 6, 7, 8 ist bei der in FIG. 1 dargestellten Transportspülmaschine 1 eine Nachwaschzone 9 und eine der Nachwaschzone 9 nachgeschaltete Klarspülzone 10 angeordnet.

In der Darstellung gemäß FIG. 1 ist die Transportvorrichtung 2 als umlaufendes Transportband dargestellt. Als Transportvorrichtung 2 sind allerdings auch Transportkörbe denkbar, in welchen das nicht explizit dargestellte Spülgut eingesetzt wird, und welche auf die Oberseite des Transportbandes aufgesetzt werden.

In Transportrichtung 3 gesehen läuft das entweder unmittelbar auf dem Transportband 2 aufgenommene Spülgut oder durch Körbe gehaltene Spülgut in der Transportrichtung 3 durch den Einlauftunnel 5, die sich daran anschließende Vorwaschzone 6, die erste Hauptwaschzone 7, die zweite Hauptwaschzone 8, die Nachwaschzone 9, die Klarspülzone 10, eine Trocknungszone 26 in eine Auslaufstrecke 25 ein.

Den genannten Behandlungszonen 6, 7, 8, 9 und 10 der Transportspülmaschine 1 sind jeweils Sprühdüsen 11, 12, 13, 14 und 15 zugeordnet, über welche Flüssigkeit auf das Spülgut gesprüht wird, das von der Transportvorrichtung 2 durch die jeweiligen Behandlungszonen 6, 7, 8, 9, und 10 transportiert wird. Jeder Behandlungszone 6, 7, 8, 9 und 10 ist ein Tank 16, 18, 20 und 22 zugeordnet, in welchem versprühte Flüssigkeit aufgenommen wird, und/oder in welchem Flüssigkeit für die Sprühdüsen der betreffenden Zonen bereitgestellt wird. Bei der in FIG. 1 dargestellten Transportspülmaschine 1 wird Klarspülflüssigkeit in Form von Frischwasser, welches rein oder mit weiteren Zusätzen, wie beispielsweise Klarspüler, versetzt sein kann, über die oberhalb und unterhalb des Transportbandes oder seitlich angeordnete Sprühdüsen 15 der Klarspülzone 10 auf das in den Zeichnungen nicht dargestellte Spülgut gesprüht.

Ein Teil der versprühten Klarspülflüssigkeit wird über ein Kaskadensystem entgegen der Transportrichtung 3 des Spülguts von Zone zu Zone transportiert. Der restliche Teil wird über ein Ventil 77 und eine Bypassleitung 88 direkt in den Vorwaschtank 16 geleitet.

Die versprühte Klarspülflüssigkeit wird in dem Tank 20 (Nachwaschtank 20) der Nachwaschzone 9 aufgefangen, von welchem sie über ein Pumpensystem zu den Sprühdüsen 14 (Nachwaschdüsen 14) der Nachwaschzone 9 gefördert wird. In der Nachwaschzone 9 wird Waschflüssigkeit von dem Spülgut abgespült. Die hierbei anfallende Flüssigkeit fließt in den Waschtank 18b der zweiten Hauptwaschzone 8, wird üblicherweise mit einem Reiniger versehen und durch ein Pumpensystem über die Düsen 13 (Waschdüsen 13) der zweiten Hauptwaschzone 8 auf das Spülgut gesprüht.

Von dem Waschtank 18b der zweiten Hauptwaschzone 8 fließt die Flüssigkeit in den Waschtank 18a der ersten Hauptwaschzone 7. Von dort aus wird die Flüssigkeit über ein weiteres Pumpensystem über die Waschdüsen 12 der ersten Hauptwaschzone 7 erneut auf das Spülgut gesprüht. Von dem Waschtank 18a der ersten Hauptwaschzone 7 fließt anschließend die Flüssigkeit in den Vorwaschtank 16 der Vorwaschzone 6. Die Flüssigkeit in dem Vorwaschtank 16 wird über ein Pumpensystem über die Vorwaschdüsen 11 der Vorwaschzone 6 auf das Spülgut gesprüht, um grobe Verunreinigungen von dem Spülgut zu entfernen.

Die einzelnen Spülsysteme der Behandlungszonen 6, 7, 8, 9 und 10 gewährleisten, dass das Spülgut sowohl von der Oberseite als auch der Unterseite abgespritzt wird.

Die jeweiligen Zonen 6, 7, 8, 9 und 10 der Transportspülmaschine 1 können über Trennvorhänge 37 voneinander getrennt sein. Bei der in FIG. 1 dargestellten Ausführungsform ist auch der Einlauftunnel 5 selber über einen Trennvorhang 37 von dem Einlauf 4 getrennt. Durch das Vorsehen der Trennvorhänge 37 wird ein Überspritzen von Waschflüssigkeit und Klarspülflüssigkeit und der Austritt von Wrasen aus der Transportspülmaschine verhindert.

An die Klarspülzone 10 schließt sich in Transportrichtung 3 des Spülguts die bereits erwähnte Trocknungszone 26 an. In der Trocknungszone 26 wird das Spülgut mit trockener und erwärmter Luft getrocknet, um die auf dem Spülgut befindliche Feuchtigkeit abzublasen bzw. abzutrocknen. Um den Feuchtigkeitsgehalt der Luft in einem für die Trocknung günstigen Bereich zu halten, ist es beispielsweise denkbar, über eine Öffnung, beispielsweise durch die Austrittsöffnung für das Spülgut, Raumluft zuzuführen. Die warme und angefeuchtete Luft wird beispielsweise mit Hilfe eines Gebläses 31 über eine weitere Öffnung aus der Trocknungszone 26 abgezogen.

Dabei ist vorteilhaft, dass der Abluftstrom aus der Trocknungszone 26 eine Einrichtung zur Wärmerückgewinnung 30 passiert, in welcher ein Kondensator vorgesehen sein kann. Die Einrichtung zur Wärmerückgewinnung 30 dient dazu, zumindest einen Teil der in der Abluft enthaltenen Wärmeenergie zurückzugewinnen.

Bei heutigen Band-/Korbtransportspülmaschinen wird das Spülgut durch mehrere Behandlungszonen, wie beispielsweise Vorwaschzonen, Hauptwaschzonen, Nachwaschzonen, Klarspülzonen und Trocknungszonen, befördert.

Die erfindungsgemäße Transportspülmaschine 1, wie sie beispielsweise in FIG. 1 dargestellt ist, ist dadurch gekennzeichnet, dass die Transportspülmaschine 1 ein Kamerasystem 34 aufweist, welches oberhalb der Transportvorrichtung 2 angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung 2 aufzunehmen.

Dem Kamerasystem 34 ist eine Bildverarbeitungseinrichtung 35 zugeordnet, welche ausgebildet ist zur insbesondere optionalen Vorverarbeitung des von dem Kamerasystem 34 aufgenommenen mindestens einen Bilds, zur Segmentierung des insbesondere optional vorbearbeiteten Bilds und zur Merkmalsextraktion und Klassifizierung von in dem Bild enthaltenen Objekten (Spülgutteilen).

Bei dem in FIG. 1 gezeigten Ausführungsbeispiel der erfindungsgemäßen Transportspülmaschine dient das Kamerasystem mit der zugeordneten Bildverarbeitungseinrichtung dazu, eine Beladung der Transportvorrichtung zu erfassen. Im Einzelnen dient das Kamerasystem dazu, vorzugsweise kontinuierlich oder zu vorab festgelegten Zeiten und/oder Ereignissen eine Beladung der Transportvorrichtung mit durch die Behandlungszonen der Transportspülmaschine zu transportierendem Spülgut zu ermitteln.

Beispielsweise kann das Kamerasystem hierzu ausgebildet sein, das Vorhandensein von leeren Fächern der Transportvorrichtung zu erfassen.

Da eine effiziente Beladung der Transportvorrichtung helfen kann, beim Betrieb der Transportspülmaschine Ressourcen und Zeit einzusparen, ist die Beladungserkennung der Transportvorrichtung ein wichtiger Aspekt zur Prozessoptimierung.

Gemäß einer Ausgestaltung der in FIG. 1 schematisch dargestellten Transportspülmaschine ist vorgesehen, dass die bereits erwähnte Steuereinrichtung, welche signal- oder datentechnisch mit dem Kamerasystem bzw. mit der dem Kamerasystem zugeordneten Bildverarbeitungseinrichtung verbunden ist, ausgebildet ist, insbesondere während einer Lern- oder Beobachtungsphase über mindestens einen Beobachtungszeitraum und vorzugsweise über mehrere Beobachtungszeiträume eine zeitliche Entwicklung der Beladung der Transportvorrichtung mit durch die Behandlungszonen der Spülmaschine zu transportierendem Spülgut zu ermitteln. Bei dem genannten Beobachtungszeitraum handelt es sich beispielsweise um eine Spülschicht oder um einen Spültag der Transportspülmaschine oder um einen Zeitabschnitt hiervon.

Vorzugsweise ist die Steuereinrichtung ferner ausgebildet, "künstlich" Wissen aus der in der Lern- oder Beobachtungsphase erfassten zeitlichen Entwicklung der Beladung der Transportvorrichtung zu generieren. Die Steuereinrichtung lernt aus den in der Lern- oder Beobachtungsphase erfassten Beispielen und kann diese nach Beendigung der Lern- oder Beobachtungsphase verallgemeinern. Dazu können Algorithmen der Steuereinrichtung ein statistisches Modell aufbauen, welches auf Trainingsdaten beruht, und welches gegen die Testdaten getestet wird.

Insbesondere ist somit die Steuereinrichtung der Transportspülmaschine vorzugsweise ausgebildet, anhand der ermittelten zeitlichen Entwicklung der Beladung der Transportvorrichtung ein Muster oder eine Gesetzmäßigkeit abzuleiten.

In einer Realisierung dieses Aspekts ist vorgesehen, dass die Steuereinrichtung den Beobachtungszeitraum, der vorzugsweise eine Spülschicht oder einen Spültag der Transportspülmaschine oder einen Zeitabschnitt hiervon betrifft, in einen Unterzeitraum und in mindestens einen weiteren, zweiten Unterzeitraum einteilt, wobei in dem ersten Unterzeitraum des Beobachtungszeitraums der ermittelte, insbesondere mittlere Beladungsgrad der Transportvorrichtung einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Transportvorrichtung einem zweiten relativen Wert entspricht oder in einen zweiten relativen Wertebereich fällt.

Beispielsweise entspricht der erste relative Wert des insbesondere mittleren Beladungsgrads der Transportvorrichtung einer verbleibenden Beladungskapazität der Transportvorrichtung, die größer (optional auch kleiner) ist als die verbleibende Beladungskapazität der Transportvorrichtung, die dem zweiten relativen Wert des insbesondere mittleren Beladungsgrads der Transportvorrichtung entspricht.

In anderen Worten, die Steuereinrichtung der erfindungsgemäßen Transportspülmaschine ist ausgebildet, in der Lern- oder Beobachtungsphase zu erfassen, zu welchen Zeitabschnitten/Zeitpunkten während eines Spültags oder einer Spülschicht der Transportspülmaschine eine effiziente Beladung der Transportvorrichtung vorliegt bzw. in welchen Zeitperioden/Zeitpunkten der Spülschicht bzw. des Spültags die Beladung der Transportvorrichtung/des Transportbands mit Leerstellen/Lücken durch die einzelnen Behandlungszonen der Transportvorrichtung läuft. Anhand dieses Wissens ist die Steuereinrichtung vorzugsweise ausgebildet, vorzugsweise automatisch und noch bevorzugter wahlweise automatisch während der ermittelten Zeitperioden, die im übertragenen Sinne dem ersten Unterzeitraum bzw. dem mindestens einem weiteren, zweiten Unterzeitraum des Beobachtungszeitraums entsprechen, die Prozessparameter der Transportspülmaschine entsprechend einzustellen.

Insbesondere ist die Steuereinrichtung ausgebildet, vorzugsweise nach Beendigung der Lern- oder Beobachtungsphase vorzugsweise automatisch und noch bevorzugter wahlweise automatisch während des Betriebs der Transportspülmaschine in einer Spülschicht oder in einem Spültag für den ersten Unterzeitraum mindestens eine erste, die Behandlung des Spülguts in den Behandlungszonen der Transportspülmaschine beeinfließende Maßnahme und/oder mindestens eine die Güte einer in der mindestens einen Waschzone der Transportspülmaschine zu versprühenden Waschflüssigkeit beeinfließende Maßnahme ggf. zeitlich verzögert zu initiieren, und für den mindestens einen weiteren, zweiten Unterzeitraum mindestens eine zweite, die Behandlung des Spülguts in den Behandlungszonen der Transportspülmaschine beeinfließende Maßnahme und/oder mindestens eine zweite die Güte einer in der mindestens einen Waschzone der Transportspülmaschine zu versprühenden Waschflüssigkeit beeinfließende Maßnahme ggf. zeitlich verzögert zu initiieren.

So ist es beispielsweise denkbar, dass die Steuereinrichtung der Transportspülmaschine automatisch für Zeiträume/Zeitpunkte der Spülschicht bzw. des Spültags der Transportspülmaschine beispielsweise die Transportgeschwindigkeit der Transportvorrichtung verringert, wenn die Steuereinrichtung anhand der während der Lern- oder Beobachtungsphase aufgenommenen Testdaten weiß, dass während dieser Zeitperiode bzw. während dieses Zeitpunkts die Transportvorrichtung nur teilweise beladen ist.

Als weiteres Beispiel sei genannt, dass die Steuereinrichtung insbesondere auch die Güte der in der mindestens einen Waschzone zu versprühenden Waschflüssigkeit beeinflussen kann, wenn die Steuereinrichtung "weiß", dass in der Zeitperiode eine besonders hohe Belastung der Transportvorrichtung zu erwarten ist, was gleichzusetzen ist mit einem erhöhten Schmutzeintrag. Allgemein ausgedrückt ist somit die die Behandlung des Spülguts in den Behandlungszonen der Transportspülmaschine beeinfließende Maßnahme mindestens eine der nachfolgend aufgeführten Maßnahmen:
- Erhöhen oder Verringern der Temperatur der in der mindestens einen Klarspülzone zu versprühenden Klarspülflüssigkeit;
- Erhöhen oder Verringern des Drucks der in der mindestens einen Klarspülzone zu versprühenden Klarspülflüssigkeit;
- Erhöhen oder Verringern der pro Zeiteinheit in der mindestens einen Klarspülzone versprühten Klarspülflüssigkeit;
- Erhöhen oder Verringern der Temperatur der in der mindestens einen Waschzone zu versprühenden Waschflüssigkeit;
- Erhöhen oder Verringern des Drucks der in der mindestens einen Waschzone zu versprühenden Waschflüssigkeit;
- Erhöhen oder Verringern der pro Zeiteinheit in der mindestens einen Waschzone versprühten Waschflüssigkeit; und/oder
- Erhöhen oder Verringern der Transportgeschwindigkeit der Transportvorrichtung.

So ist es insbesondere beispielsweise denkbar, dass die Steuereinrichtung automatisch und vorzugsweise wahlweise automatisch für Zeitperioden während der Spülschicht oder des Spültags der Transportspülmaschine die Transportgeschwindigkeit der Transportvorrichtung verringert, wenn die Steuereinrichtung anhand der während der Lern- oder Beobachtungsphase ermittelten Testdaten davon ausgeht, dass während dieser Zeitperiode nur eine geringe Beladung, das heißt ein niedriger Beladungsgrad, der Transportvorrichtung zu erwarten ist. Mit der verringerten Transportgeschwindigkeit erhöht sich die Kontaktzeit des mit der Transportvorrichtung durch die Behandlungszonen der Transportspülmaschine transportierten Spülguts, so dass gleichzeitig auch die Mechanik und/oder Temperatur der in der Behandlungszonen versprühten Flüssigkeit reduziert werden kann, was einen positiven Einfluss auf die Energieeffizienz der Maschine hat.

Im Hinblick auf die die Güte der in der mindestens einen Waschzone der Transportspülmaschine zu versprühenden Waschflüssigkeit beeinfließende Maßnahme ist mindestens eine der nachfolgend aufgeführten Maßnahmen denkbar:
▪ Erhöhen oder Verringern einer Regeneration der in der mindestens einen Waschzone der Transportspülmaschine zu versprühenden Waschflüssigkeit;
▪ Erhöhen oder Verringern eines Schmutztragevermögens der in der mindestens einen Waschzone zu versprühenden Waschflüssigkeit; und/oder
▪ Aktivieren oder Deaktivieren eines Schmutzaustrags aus der in der mindestens einen Waschzone zu versprühenden Waschflüssigkeit.

Die Regeneration der in der mindestens einen Waschzone der Transportspülmaschine zu versprühende Waschflüssigkeit kann erhöht bzw. verringert werden, indem die pro Zeiteinheit in den Waschtank der Waschzone zulaufende Menge an Wasser meist aus der in Transportrichtung der Transportvorrichtung vorgeschalteten Frischwasser-Klarspülung variiert wird.

Unter dem Schmutzaustragevermögen der Waschflüssigkeit ist die Fähigkeit der Waschflüssigkeit zu verstehen, Speisereste so zu dispergieren oder so zu emulgieren, dass sie sich nicht wieder auf schon gereinigte Spülgutoberflächen absetzen können. Das Schmutzaustragevermögen kann insbesondere durch die Konzentration an Reinigerchemikalie in der Waschflüssigkeit beeinflusst werden.

Andererseits beeinflusst die Schmutzbelastung der Waschflüssigkeit das Reinigungsergebnis sowie die Schaumbildung. Die Schmutzbelastung der Waschflüssigkeit ist die Gesamtheit aller Schmutzbestandteile, leicht- bzw. schwerlöslicher, emulgier- bzw. dispergierbarer Verunreinigungen der Waschflüssigkeit. Um die Schmutzbelastung der Waschflüssigkeit zu verringern, ist es denkbar, einen Schmutzaustrag aus der in der Waschzone zu versprühenden Waschflüssigkeit zu aktivieren.

Hierzu ist es beispielsweise denkbar, dass die mindestens eine Waschzone ein als Rezirkulationskreislauf ausgebildetes Waschsystem aufweist, wobei das Waschsystem ein Düsensystem mit mindestens einer Waschdüse zum Versprühen von Waschflüssigkeit auf das zu reinigende Spülgut, einen Waschtank zum Auffangen von zumindest einem Teil der versprühten Waschflüssigkeit und eine Waschpumpe zum Zuführen von in dem Waschtank gesammelter Waschflüssigkeit zu der mindestens einen Waschdüse aufweist.

Ferner ist ein (in FIG. 1 nicht gezeigtes) Waschaustragsystem vorgesehen, welches dem mindestens einen Waschsystem zugeordnet ist. Das in der Zeichnung nicht explizite Schmutzaustragsystem weist ein Tankabdecksieb auf, welches ausgebildet ist, um Schmutzpartikel von der versprühten und durch Schwerkraft in den Waschtank zurückfließenden Waschflüssigkeit abzutrennen. Ferner weist das Schmutzaustragsystem vorzugsweise einen zumindest bereichsweise in dem Waschtank angeordneten Schmutzsammelbereich auf, um die mit Hilfe des Tankabdecksiebs von der Waschflüssigkeit abgetrennten Schmutzpartikel zu sammeln.

Insbesondere ist es in diesem Zusammenhang denkbar, dass ein den Schmutzsammelbereich strömungsmäßig verbundenes Schmutzaustragsystem vorgesehen ist, über welches der Schmutzsammelbereich insbesondere bedarfsweise geleert werden kann.

In einer Realisierung der erfindungsgemäßen Transportspülmaschine kann dabei die Steuereinrichtung ausgebildet sein, vorzugsweise automatisch und noch bevorzugter wahlweise automatisch in Abhängigkeit von dem ermittelten, insbesondere mittleren Beladungsgrad der Transportvorrichtung und ggf. zeitlich verzögert das Schmutzaustragsystem und insbesondere eine dem Schmutzaustragsystem zugeordnete Schmutzaustragpumpe zu aktivieren und/oder zu deaktivieren, um so die Schmutzbelastung der Waschflüssigkeit zu verringern.

Wie in FIG. 1 angedeutet, weist die Einrichtung zum Erfassen einer Beladung der Transportvorrichtung der Transportspülmaschine ein Kamerasystem auf, welches ober- oder unterhalb der oder seitlich zur Transportvorrichtung angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung aufzunehmen. Ferner ist die bereits erwähnte Auswerteeinrichtung vorgesehen, welche ausgebildet ist, auszuwerten und zu ermitteln, ob zum Zeitpunkt der Bildaufnahme in dem Bereich der Transportvorrichtung spülgutfreie Bereiche vorhanden sind, und/oder wie der Beladungsgrad der Transportvorrichtung ist.

Die erfindungsgemäße Transportspülmaschine, welche schematisch in FIG. 1 gezeigt ist, muss nicht zwangsläufig ausgebildet sein, über ein maschinelles Lernen während einer Lern- oder Beobachtungsphase ein Muster oder eine Gesetzmäßigkeit von der zeitlichen Entwicklung der Beladung der Transportvorrichtung abzuleiten.

Grundsätzlich ist es auch denkbar, dass die Steuereinrichtung der Transportspülmaschine ausgebildet ist, eine Meldung, insbesondere Fehler- oder Warnmeldung, insbesondere an das der Transportspülmaschine zugeordnete Spülpersonal und/oder an den Betreiber der Transportspülmaschine auszugeben, wenn von der Einrichtung zum Erfassen einer Beladung der Transportvorrichtung ermittelt wird, dass ein aktueller oder - über eine insbesondere vorab festgelegte oder festlegbare Zeitperiode - gemittelter Beladungsgrad der Transportvorrichtung unterhalb eines vorab festgelegten oder festlegbaren Beladungsgrads der Transportvorrichtung liegt.

Alternativ oder zusätzlich hierzu kann die Steuereinrichtung ausgebildet sein, eine zeitliche Entwicklung der Beladung der Transportvorrichtung mit durch die Behandlungszonen der Transportspülmaschine zu transportierendem Spülgut zu ermitteln und/oder eine Statistik über den Beladungsgrad der Transportvorrichtung zu erstellen.

Die ermittelte zeitliche Entwicklung der Beladung der Transportvorrichtung und/oder die Statistik über den Beladungsgrad der Transportvorrichtung kann als zustandsbasierte Überwachung dienen. Darüber hinaus kann diese Information zum Zwecke des "Predictive Maintenance" genutzt werden. Hierdurch ist es möglich, zusätzliche Erkenntnis in Bezug auf den Betrieb der Transportspülmaschine zu erlangen, so dass Wartungen besser geplant werden können, ohne den Betrieb der Transportspülmaschine während einer Spülschicht bzw. während eines Spültags zu beeinträchtigen.

Demgemäß betrifft die Erfindung insbesondere auch ein Verfahren zum Betreiben einer Transportspülmaschine, insbesondere einer Transportspülmaschine, wie sie schematisch in FIG. 1 dargestellt ist. Bei dem Verfahren ist es denkbar, dass insbesondere während einer Beobachtungsphase über einen Beobachtungszeitraum, der vorzugsweise eine Spülschicht oder einen Spültag der Transportspülmaschine betrifft, eine zeitliche Entwicklung des von der Einrichtung zum Erfassen einer Beladung der Transportvorrichtung ermittelten Beladungsgrads der Transportvorrichtung ermittelt und anhand der ermittelten zeitlichen Entwicklung ein Muster oder eine Gesetzmäßigkeit abgeleitet wird.

Alternativ oder zusätzlich hierzu ist es denkbar, dass während einer Beobachtungsphase über einen Beobachtungszeitraum, der vorzugsweise eine Spülschicht oder einen Spültag der Transportspülmaschine betrifft, eine Statistik über den Zeitpunkt des Beladungsgrads der Transportvorrichtung erstellt wird.

In Abhängigkeit von der ermittelten zeitlichen Entwicklung und/oder in Abhängigkeit von der erstellten Statistik kann eine entsprechende Meldung generiert und/oder an insbesondere den Betreiber der Transportspülmaschine ausgegeben werden, wobei die Meldung vorzugsweise eine Empfehlung für einen insbesondere im Hinblick auf die Reinigungseffizienz optimierten Betrieb der Transportspülmaschine enthält.

Auch ist es denkbar, dass eine Fehler- oder Warnmeldung insbesondere an das der Transportspülmaschine zugeordnete Spülpersonal und/oder an den Betreiber der Transportspülmaschine ausgegeben wird, wenn ermittelt wird, dass der ermittelte, insbesondere mittlere Beladungsgrad der Transportvorrichtung einen vorab festgelegten oder festlegbaren Beladungsgrad unterschreitet.

Die Erfindung ist nicht auf die in FIG. 1 gezeigte Transportspülmaschine beschränkt, sondern ergibt sich aus einer Zusammenschau sämtlicher hierin offenbarter Merkmale.

## Patentansprüche

1. Transportspülmaschine (1) zum Reinigen von Spülgut, wobei die Transportspülmaschine (1) mindestens eine Waschzone (6, 7, 8, 9) und mindestens eine Klarspülzone (10) sowie eine Transportvorrichtung (2) aufweist zum Transportieren von Spülgut durch die mindestens eine Waschzone (6, 7, 8, 9) und die mindestens eine Klarspülzone (10), wobei die Transportspülmaschine (1) eine Einrichtung zum Erfassen einer Beladung der Transportvorrichtung (2) aufweist, welche ausgebildet ist, vorzugsweise kontinuierlich oder zu vorab festgelegten Zeiten und/oder Ereignissen eine Beladung der Transportvorrichtung (2) mit durch die Behandlungszonen der Transportspülmaschine (1) zu transportierendem Spülgut zu ermitteln,
**dadurch gekennzeichnet, dass**
die Transportspülmaschine (1) eine Steuereinrichtung (36) aufweist, welche ausgebildet ist, während einer Lern- oder Beobachtungsphase über mehrere Beobachtungszeiträume, die jeweils eine Spülschicht oder einen Spültag der Transportspülmaschine (1) oder einen Zeitabschnitt hiervon betreffen, eine zeitliche Entwicklung der Beladung der Transportvorrichtung (2) mit durch die Behandlungszonen der Transportspülmaschine (1) zu transportierendem Spülgut zu ermitteln, wobei die Steuereinrichtung (36) ferner ausgebildet ist, anhand der ermittelten zeitlichen Entwicklung der Beladung der Transportvorrichtung (2) ein Muster oder eine Gesetzmäßigkeit abzuleiten,
wobei die Steuereinrichtung (36) ferner ausgebildet ist, die mehreren Beobachtungszeiträume in einen ersten Unterzeitraum und in mindestens einen weiteren, zweiten Unterzeitraum einzuteilen, wobei in dem ersten Unterzeitraum des Beobachtungszeitraums der ermittelte, insbesondere mittlere Beladungsgrad der Transportvorrichtung (2) einem ersten relativen Wert entspricht oder in einen ersten relativen Wertebereich fällt, und wobei in dem mindestens einen zweiten Unterzeitraum des Beobachtungszeitraums der ermittelte, insbesondere mittlere Beladungsgrad der Transportvorrichtung (2) einem zweiten relativen Wert entspricht oder in einen zweiten relativen Wertebereich fällt,
wobei der erste relative Wert des insbesondere mittleren Beladungsgrads der Transportvorrichtung (2) einer verbleibenden Beladungskapazität der Transportvorrichtung (2) entspricht, die größer ist als die verbleibende Beladungskapazität der Transportvorrichtung (2), die dem zweiten relativen Wert des insbesondere mittleren Beladungsgrads der Transportvorrichtung (2) entspricht, und
wobei die Steuereinrichtung (36) ferner ausgebildet ist, insbesondere nach Beendigung der Lern- oder Beobachtungsphase vorzugsweise automatisch und noch bevorzugter wahlweise automatisch während des Betriebs der Transportspülmaschine (1) während einer Spülschicht oder während eines Spültags für den ersten Unterzeitraum mindestens eine erste, die Behandlung des Spülguts in den Behandlungszonen der Transportspülmaschine (1) beeinfließende Maßnahme und/oder mindestens eine die Güte einer in der mindestens einen Waschzone (6, 7, 8, 9) der Transportspülmaschine (1) zu versprühenden Waschflüssigkeit beeinfließende Maßnahme zu initiieren, und für den mindestens einen zweiten Unterzeitraum mindestens eine zweite, die Behandlung des Spülguts in den Behandlungszonen der Transportspülmaschine (1) beeinfließende Maßnahme und/oder mindestens eine zweite die Güte einer in der mindestens einen Waschzone (6, 7, 8, 9) der Transportspülmaschine (1) zu versprühenden Waschflüssigkeit beeinfließende Maßnahme zu initiieren.

2. Transportspülmaschine (1) nach Anspruch 1,
wobei die die Behandlung des Spülguts in den Behandlungszonen der Transportspülmaschine (1) beeinfließende Maßnahme mindestens eine der nachfolgend aufgeführten Maßnahmen ist:
- Erhöhen oder Verringern der Temperatur der in der mindestens einen Klarspülzone (10) zu versprühenden Klarspülflüssigkeit; und/oder
- Erhöhen oder Verringern des Drucks der in der mindestens einen Klarspülzone (10) zu versprühenden Klarspülflüssigkeit; und/oder
- Erhöhen oder Verringern der pro Zeiteinheit in der mindestens einen Klarspülzone (10) versprühten Menge an Klarspülflüssigkeit; und/oder
- Erhöhen oder Verringern der Temperatur der in der mindestens einen Waschzone (6, 7, 8, 9) zu versprühenden Waschflüssigkeit; und/oder
- Erhöhen oder Verringern des Drucks der in der mindestens einen Waschzone (6, 7, 8, 9) zu versprühenden Waschflüssigkeit; und/oder
- Erhöhen oder Verringern der pro Zeiteinheit in der mindestens einen Waschzone (6, 7, 8, 9) versprühten Menge an Waschflüssigkeit; und/oder
- Erhöhen oder Verringern des Drucks der in einer optionalen Trocknungszone zu versprühenden Trocknungsluft; und/oder
- Erhöhen oder Verringern der Temperatur der in einer optionalen Trocknungszone zu versprühenden Trocknungsluft; und/oder
- Erhöhen oder Verringern der pro Zeiteinheit in einer optionalen Trocknungszone versprühten Menge an Trocknungsluft; und/oder
- Erhöhen oder Verringern der Transportgeschwindigkeit der Transportvorrichtung (2).

3. Transportspülmaschine (1) nach Anspruch 1 oder 2,
wobei die die Güte der in der mindestens einen Waschzone (6, 7, 8, 9) der Transportspülmaschine (1) zu versprühenden Waschflüssigkeit beeinfließende Maßnahme mindestens eine der nachfolgend aufgeführten Maßnahmen ist:
- Erhöhen oder Verringern einer Regeneration der in der mindestens einen Waschzone (6, 7, 8, 9) der Transportspülmaschine (1) zu versprühenden Waschflüssigkeit;
- Erhöhen oder Verringern eines Schmutztragevermögens der in der mindestens einen Waschzone (6, 7, 8, 9) zu versprühenden Waschflüssigkeit; und/oder
- Aktivieren oder Deaktivieren eines Schmutzaustrags aus der in der mindestens einen Waschzone (6, 7, 8, 9) zu versprühenden Waschflüssigkeit.

4. Transportspülmaschine (1) nach Anspruch 3,
wobei die mindestens eine Waschzone (6, 7, 8, 9) ein als Rezirkulationskreislauf ausgebildetes Waschsystem aufweist, wobei das Waschsystem ein Düsensystem mit mindestens einer Waschdüse zum Versprühen von Waschflüssigkeit auf das zu reinigende Spülgut, einen Waschtank zum Auffangen von zumindest einem Teil der versprühten Waschflüssigkeit und eine Waschpumpe zum Zuführen von in dem Waschtank gesammelter Waschflüssigkeit zu der mindestens einen Waschdüse aufweist, und wobei ferner ein dem mindestens einen Waschsystem zugeordnetes Schmutzaustragsystem vorgesehen ist, wobei dem Schmutzaustragsystem ein Tankabdecksieb zugeordnet ist, welches ausgebildet ist, um Schmutzpartikel von der versprühten und durch Schwerkraft in den Waschtank zurückfließenden Waschflüssigkeit abzutrennen, wobei das Schmutzaustragsystem einen zumindest bereichsweise in dem Waschtank angeordneten Schmutzsammelbereich aufweist zum Sammeln der mit Hilfe des Tankabdecksiebs von der Waschflüssigkeit abgetrennten Schmutzpartikel, und wobei ferner ein mit dem Schmutzsammelbereich strömungsmäßig verbundenes Schmutzaustragsystem vorgesehen ist, über welches der Schmutzsammelbereich insbesondere bedarfsweise geleert werden kann, wobei die Steuereinrichtung (36) ausgebildet ist, vorzugsweise automatisch und noch bevorzugter wahlweise automatisch in Abhängigkeit von dem ermittelten, insbesondere mittleren Beladungsgrad der Transportvorrichtung (2) und ggf. zeitlich verzögert das Schmutzaustragsystem und insbesondere eine dem Schmutzaustragsystem zugeordnete Schmutzaustragpumpe zu aktivieren und/oder zu deaktivieren.

5. Transportspülmaschine (1) nach einem der Ansprüche 1 bis 4,
wobei die Einrichtung zum Erfassen einer Beladung der Transportvorrichtung (2) ein Kamerasystem aufweist, welches ober- oder unterhalb der oder seitlich zur Transportvorrichtung (2) angeordnet und ausgebildet ist, vorzugsweise kontinuierlich oder zu vorab festgelegten oder festlegbaren Zeiten und/oder Ereignissen mindestens ein Bild von einem Bereich der Transportvorrichtung (2) aufzunehmen, wobei ferner eine Auswerteeinrichtung vorgesehen ist, welche ausgebildet ist, auszuwerten und zu ermitteln, ob zum Zeitpunkt der Bildaufnahme in dem Bereich der Transportvorrichtung (2) spülgutfreie Bereiche vorhanden sind, und/oder wie der Beladungsgrad der Transportvorrichtung (2) ist.

6. Transportspülmaschine (1) nach einem der Ansprüche 1 bis 5,
**dadurch gekennzeichnet, dass**
die Transportspülmaschine (1) eine Steuereinrichtung (36) aufweist, welche ausgebildet ist, eine Meldung, insbesondere Fehler- oder Warnmeldung, insbesondere an das der Transportspülmaschine (1) zugeordnete Spülpersonal und/oder an den Betreiber der Transportspülmaschine (1) auszugeben, wenn von der Einrichtung zum Erfassen einer Beladung der Transportvorrichtung (2) ermittelt wird, dass ein aktueller oder - über eine insbesondere vorab festgelegte oder festlegbare Zeitperiode - gemittelter Beladungsgrad der Transportvorrichtung (2) unterhalb eines vorab festgelegten oder festlegbaren Beladungsgrads der Transportvorrichtung (2) liegt.

7. Transportspülmaschine (1) nach einem der Ansprüche 1 bis 6,
**dadurch gekennzeichnet, dass**
die Transportspülmaschine (1) eine Steuereinrichtung (36) aufweist, welche ausgebildet ist, eine zeitliche Entwicklung der Beladung der Transportvorrichtung (2) mit durch die Behandlungszonen der Transportspülmaschine (1) zu transportierendem Spülgut zu ermitteln und/oder eine Statistik über den Beladungsgrad der Transportvorrichtung (2) zu erstellen.

8. Transportspülmaschine (1) nach Anspruch 7,
wobei die Steuereinrichtung (36) ferner ausgebildet ist, in Abhängigkeit von der ermittelten zeitlichen Entwicklung und/oder in Abhängigkeit von der erstellten Statistik eine entsprechende Meldung zu generieren und/oder an insbesondere den Betreiber der Transportspülmaschine (1) auszugeben, wobei die Meldung vorzugsweise eine Empfehlung für einen insbesondere im Hinblick auf die Reinigungseffizienz optimierten Betrieb der Transportspülmaschine (1) enthält.

9. Verfahren zum Betreiben einer Transportspülmaschine (1) nach einem der Ansprüche 1 bis 8, wobei das Verfahren die folgenden Verfahrensschritte aufweist:
- während einer Beobachtungsphase über einen Beobachtungszeitraum, der eine Spülschicht oder einen Spültag der Transportspülmaschine (1) betrifft, wird eine zeitliche Entwicklung des von der Einrichtung zum Erfassen einer Beladung der Transportvorrichtung (2) ermittelten Beladungsgrads der Transportvorrichtung (2) ermittelt und anhand der ermittelten zeitlichen Entwicklung wird ein Muster oder eine Gesetzmäßigkeit abgeleitet; und/oder
- während einer Beobachtungsphase über einen Beobachtungszeitraum, der eine Spülschicht oder einen Spültag der Transportspülmaschine (1) betrifft, wird eine Statistik über die zeitliche Entwicklung des Beladungsgrads der Transportvorrichtung (2) erstellt.

10. Verfahren nach Anspruch 9,
wobei in Abhängigkeit von der ermittelten zeitlichen Entwicklung und/oder in Abhängigkeit von der erstellen Statistik eine entsprechende Meldung generiert und/oder an insbesondere den Betreiber der Transportspülmaschine (1) ausgegeben wird, wobei die Meldung vorzugsweise eine Empfehlung für einen insbesondere im Hinblick auf die Reinigungseffizienz optimierten Betrieb der Transportspülmaschine (1) enthält.

11. Verfahren nach Anspruch 9 oder 10,
wobei eine Fehler- oder Warnmeldung insbesondere an das der Transportspülmaschine (1) zugeordnete Spülpersonal und/oder an den Betreiber der Transportspülmaschine (1) ausgegeben wird, wenn ermittelt wird, dass der ermittelte, insbesondere mittlere Beladungsgrad der Transportvorrichtung (2) einen vorab festgelegten oder festlegbaren Beladungsgrad unterschreitet.

## Claims

1. A conveyor warewasher (1) for cleaning washware, wherein the conveyor warewasher (1) comprises at least one washing zone (6, 7, 8, 9) and at least one rinsing zone (10) as well as a conveyor apparatus (2) for conveying washware through the at least one washing zone (6, 7, 8, 9) and the at least one rinsing zone (10), wherein the conveyor warewasher (1) comprises a facility for detecting a loading of the conveyor apparatus (2), said device being configured to establish, preferably continuously or at previously specified times and/or events, a loading of the conveyor apparatus (2) with washware to be conveyed through the treatment zones of the conveyor warewasher (1),
**characterized in that**
the conveyor warewasher (1) comprises a control facility (36) which is configured to establish, during a learning or observation phase over a plurality of observation periods which each relate to a washing shift or a washing day of the conveyor warewasher (1) or a time portion thereof, a chronological development of the loading of the transport apparatus (2) with washware to be conveyed through the treatment zones of the conveyor warewasher (1), wherein the control facility (36) is further configured to derive, on the basis of the established chronological development of the loading of the conveyor apparatus (2), a pattern or a regularity,
wherein the control facility (36) is further configured to subdivide the plurality of observation periods into a first subperiod and into at least one further, second subperiod, wherein in the first subperiod of the observation period, the established, in particular average, loading level of the conveyor apparatus (2) corresponds to a first relative value or falls within a first relative value range, and wherein in the at least one second subperiod of the observation period, the established, in particular average, loading level of the conveyor apparatus (2) corresponds to a second relative value or falls within a second relative value range, wherein the first relative value of the, in particular average, loading level of the conveyor apparatus (2) corresponds to a remaining loading capacity of the conveyor apparatus (2) that is greater than the remaining loading capacity of the conveyor apparatus (2) that corresponds to the second relative value of the, in particular average, loading level of the conveyor apparatus (2), and wherein the control facility (36) is further configured to initiate, in particular, after the ending of the learning or observation phase, preferably automatically and more preferably optionally automatically, during the operation of the conveyor warewasher (1) during a washing shift or during a washing day, for the first subperiod, at least one first measure influencing the treatment of the washware in the treatment zones of the conveyor warewasher (1) and/or at least one measure influencing the quality of a washing liquid to be sprayed in the at least one washing zone (6, 7, 8, 9) of the conveyor warewasher (1), and to initiate, for the at least one second subperiod, at least one second measure influencing the treatment of the washware in the treatment zones of the conveyor warewasher (1) and/or at least one second measure influencing the quality of a washing liquid to be sprayed in the at least one washing zone (6, 7, 8, 9) of the conveyor warewasher (1).

2. The conveyor warewasher (1) according to claim 1,
wherein the measure influencing the treatment of the washware in the treatment zones of the conveyor warewasher (1) is at least one of the following measures:
- increasing or decreasing the temperature of the rinsing liquid to be sprayed in the at least one rinsing zone (10); and/or
- increasing or decreasing the pressure of the rinsing liquid to be sprayed in the at least one rinsing zone (10); and/or
- increasing or decreasing the quantity of the rinsing liquid sprayed in the at least one rinsing zone (10) per unit time; and/or
- increasing or decreasing the temperature of the washing liquid to be sprayed in the at least one washing zone (6, 7, 8, 9); and/or
- increasing or decreasing the pressure of the washing liquid to be sprayed in the at least one washing zone (6, 7, 8, 9); and/or
- increasing or decreasing the quantity of the washing liquid sprayed in the at least one washing zone (6, 7, 8, 9) per unit time; and/or
- increasing or decreasing the pressure of the drying air to be sprayed in an optional drying zone; and/or
- increasing or decreasing the temperature of the drying air to be sprayed in an optional drying zone; and/or
- increasing or decreasing the quantity of drying air sprayed in an optional drying zone per unit time; and/or
- increasing or decreasing the conveying speed of the conveyor apparatus (2).

3. The conveyor warewasher (1) according to claim 1 or 2, wherein the measure influencing the quality of the washing liquid to be sprayed in the at least one washing zone (6, 7, 8, 9) of the conveyor warewasher (1) is at least one of the following measures:
- increasing or decreasing a regeneration of the washing liquid to be sprayed in the at least one washing zone (6, 7, 8, 9) of the conveyor warewasher (1);
- increasing or decreasing a dirt carrying capacity of the washing liquid to be sprayed in the at least one washing zone (6, 7, 8, 9); and/or
- activating or deactivating a dirt discharge from the washing liquid to be sprayed in the at least one washing zone (6, 7, 8, 9).

4. The conveyor warewasher (1) according to claim 3,
wherein the at least one washing zone (6, 7, 8, 9) comprises a washing system configured as a recirculation circuit, wherein the washing system comprises a nozzle system with at least one washing nozzle for spraying washing liquid onto the washware to be cleaned, a wash tank for collecting at least a portion of the sprayed washing liquid and a wash pump for supplying washing liquid collected in the wash tank to the at least one washing nozzle, and wherein furthermore a dirt discharge system associated with the at least one washing system is provided, wherein a tank cover screen is associated with the dirt discharge system and is configured to separate dirt particles from the sprayed washing liquid flowing under gravity back into the wash tank, wherein the dirt discharge system comprises a dirt collection region arranged at least partially in the wash tank to collect the dirt particles separated from the washing liquid with the aid of the tank cover screen, and wherein furthermore, a dirt discharge system fluidically connected to the dirt collection region is provided, by means of which the dirt collection region can be emptied, in particular as needed, wherein the control facility (36) is configured to activate and/or deactivate the dirt discharge system and, in particular, a dirt discharge pump associated with the dirt discharge system, preferably automatically and more preferably optionally automatically, dependent upon the established, in particular average, loading level of the conveyor apparatus (2) and possibly with a time delay.

5. The conveyor warewasher (1) according to one of claims 1 to 4,
wherein the facility for detecting a loading of the conveyor apparatus (2) comprises a camera system which is arranged above or below or laterally relative to the conveyor apparatus (2) and is configured to record at least one image of a region of the conveyor apparatus (2), preferably continuously or at previously specified or specifiable times and/or events, wherein furthermore, an evaluating facility is provided which is configured to evaluate and establish whether at the time point of the image recording, washware-free regions are present in the region of the conveyor apparatus (2) and/or what the loading level of the conveyor apparatus (2) is**.**

6. The conveyor warewasher (1) according to one of claims 1 to 5,
**characterized in that**
the conveyor warewasher (1) has a control facility (36) which is configured to output a message, in particular an error or warning message, in particular, to the washing personnel assigned to the conveyor warewasher (1) and/or to the operator of the conveyor warewasher (1) if it is established by the facility for detecting a loading of the conveyor apparatus (2) that a current loading level or a loading level of the conveyor apparatus (2) averaged over a previously specified or specifiable time period is below a previously specified or specifiable loading level of the conveyor apparatus (2).

7. The conveyor warewasher (1) according to one of claims 1 to 6,
**characterized in that**
the conveyor warewasher (1) comprises a control facility (36) which is configured to establish a chronological development of the loading of the conveyor apparatus (2) with washware to be conveyed through the treatment zones of the conveyor warewasher (1) and/or to create a statistic regarding the loading level of the conveyor apparatus (2).

8. The conveyor warewasher (1) according to claim 7,
wherein the control facility (36) is further configured, dependent upon the chronological development established and/or dependent upon the statistic created, to generate a corresponding message and/or to output it in particular to the operator of the conveyor warewasher (1), wherein the message preferably contains a recommendation for an optimized operation of the conveyor warewasher (1), in particular, with regard to cleaning efficiency.

9. A method for operating a conveyor warewasher (1) according to one of claims 1 to 8
wherein the method comprises the following method steps:
- during an observation phase over an observation period relating to a washing shift or a washing day of the conveyor warewasher (1), a chronological development of the loading level of the conveyor apparatus (2) established by the facility for detecting a loading of the conveyor apparatus (2) is established and, on the basis of the chronological development established, a pattern or a regularity is derived; and/or
- during an observation phase over an observation period relating to a washing shift or a washing day of the conveyor warewasher (1), a statistic is created relating to the chronological development of the loading level of the conveyor apparatus (2).

10. The method according to claim 9,
wherein, dependent upon the chronological development established and/or dependent upon the statistic created, a corresponding message is generated and/or is output in particular to the operator of the conveyor warewasher (1), wherein the message preferably contains a recommendation for an optimized operation of the conveyor warewasher (1), in particular, with regard to cleaning efficiency.

11. The method according to claim 9 or 10,
wherein an error or warning message is output, in particular, to the wash personnel assigned to the conveyor warewasher (1) and/or to the operator of the conveyor warewasher (1) if it is established that the established, in particular average, loading level of the conveyor apparatus (2) falls below a previously specified or specifiable loading level.

## Revendications

1. Lave-vaisselle à transporteur (1) pour le nettoyage de la vaisselle, dans lequel le lave-vaisselle à transporteur (1) comprend l'au moins une zone de lavage (6, 7, 8, 9) et l'au moins une zone de rinçage (10) ainsi qu'un dispositif de transport (2) pour transporter la vaisselle à travers l'au moins une zone de lavage (6, 7, 8, 9) et l'au moins une zone de rinçage (10), dans lequel le lave-vaisselle à transporteur (1) comprend un dispositif de détection du chargement du dispositif de transport (2), ce dispositif étant configuré pour établir, de préférence en continu ou à des moments et/ou événements préalablement spécifiés, un chargement du dispositif de transport (2) avec de la vaisselle à transporter par les zones de traitement du lave-vaisselle à transporteur (1),
**caractérisé en ce que**
le lave-vaisselle à transporteur (1) comprend un dispositif de commande (36) configuré pour établir, au cours d'une phase d'apprentissage ou d'observation sur plusieurs périodes d'observation se rapportant chacune à une équipe de lavage ou à une journée de lavage du lave-vaisselle à transporteur (1) ou à une portion de temps de celle-ci, une évolution chronologique du chargement du dispositif de transport (2) avec de la vaisselle à transporter dans les zones de traitement du lave-vaisselle à transporteur (1), dans lequel le dispositif de commande (36) est en outre configuré pour dériver, à partir de l'évolution chronologique établie du chargement du dispositif de transport (2) un modèle ou une régularité,
dans lequel le dispositif de commande (36) est en outre configuré pour subdiviser la pluralité de périodes d'observation en une première sous-période et en au moins une autre deuxième sous-période, dans laquelle, dans la première sous-période de la période d'observation, le niveau de chargement établi, en particulier moyen, du dispositif de transport (2) correspond à une première valeur relative ou se situe dans une première plage de valeurs relatives, et dans laquelle, dans au moins une deuxième sous-période de la période d'observation, le niveau de chargement établi, en particulier moyen, du dispositif de transport (2) correspond à une deuxième valeur relative ou se situe dans une deuxième plage de valeurs relatives,
dans lequel la première valeur relative du niveau de chargement, en particulier moyen, du dispositif de transport (2) correspond à une capacité de chargement restante du dispositif de transport (2) qui est supérieure à la capacité de chargement restante du dispositif de transport (2) qui correspond à la deuxième valeur relative du niveau de chargement, en particulier moyen, du dispositif de transport (2), et
dans lequel le dispositif de commande (36) est en outre configuré pour déclencher, en particulier après la fin de la phase d'apprentissage ou d'observation, de préférence automatiquement et plus préférablement en option automatiquement, pendant le fonctionnement du lave-vaisselle à transporteur (1) au cours d'une équipe de lavage ou d'une journée de lavage, pour la première sous-période, au moins une première mesure influençant le traitement de la vaisselle dans les zones de traitement du lave-vaisselle à transporteur (1) et/ou au moins une mesure influençant la qualité d'un liquide de lavage à pulvériser dans l'au moins une zone de lavage (6, 7, 8, 9) du lave-vaisselle à transporteur (1), et de lancer, pour au moins une deuxième sous-période, au moins une deuxième mesure influençant le traitement de la vaisselle dans les zones de traitement du lave-vaisselle à transporteur (1) et/ou au moins une deuxième mesure influençant la qualité d'un liquide de lavage à pulvériser dans au moins une zone de lavage (6, 7, 8, 9) du lave-vaisselle à transporteur (1).

2. Lave-vaisselle à transporteur (1) selon la revendication 1, dans lequel la mesure influençant le traitement de la vaisselle dans les zones de traitement du lave-vaisselle à transporteur (1) est au moins l'une des mesures suivantes :
- augmenter ou diminuer la température du liquide de rinçage à pulvériser dans l'au moins une zone de rinçage (10) ; et/ou
- augmenter ou diminuer la pression du liquide de rinçage à pulvériser dans l'au moins une zone de rinçage (10) ; et/ou
- augmenter ou diminuer la quantité de liquide de rinçage pulvérisé dans l'au moins une zone de rinçage (10) par unité de temps ; et/ou
- augmenter ou diminuer la température du liquide de lavage à pulvériser dans l'au moins une zone de lavage (6, 7, 8, 9) ; et/ou
- augmenter ou diminuer la pression du liquide de lavage à pulvériser dans l'au moins une zone de lavage (6, 7, 8, 9) ; et/ou
- augmenter ou diminuer la quantité de liquide de lavage pulvérisé dans l'au moins une zone de lavage (6, 7, 8, 9) par unité de temps ; et/ou
- augmenter ou diminuer la pression de l'air de séchage à pulvériser dans une zone de séchage optionnelle ; et/ou
- augmenter ou diminuer la température de l'air de séchage à pulvériser dans une zone de séchage optionnelle ; et/ou
- augmenter ou diminuer la quantité de l'air de séchage pulvérisé dans une zone de séchage optionnelle par unité de temps ; et/ou
- augmenter ou diminuer la vitesse de transport du dispositif de transport (2).

3. Lave-vaisselle à transporteur (1) selon la revendication 1 ou 2,
dans lequel la mesure influençant la qualité du liquide de lavage à pulvériser dans l'au moins une zone de lavage (6, 7, 8, 9) du lave-vaisselle à transporteur (1) est au moins l'une des mesures suivantes :
- augmenter ou diminuer une régénération du liquide de lavage à pulvériser dans l'au moins une zone de lavage (6, 7, 8, 9) du lave-vaisselle à transporteur (1) ;
- augmenter ou diminuer la capacité de transport de la saleté du liquide de lavage à pulvériser dans l'au moins une zone de lavage (6, 7, 8, 9) ; et/ou
- l'activation ou la désactivation d'une évacuation de la saleté du liquide de lavage à pulvériser dans l'au moins une zone de lavage (6, 7, 8, 9).

4. Lave-vaisselle à transporteur (1) selon la revendication 3, dans lequel l'au moins une zone de lavage (6, 7, 8, 9) comprend un système de lavage configuré comme un circuit de recirculation, dans lequel le système de lavage comprend un système de buses avec l'au moins une buse de lavage pour pulvériser le liquide de lavage sur la vaisselle à nettoyer, un réservoir de lavage pour collecter au moins une partie du liquide de lavage pulvérisé et une pompe de lavage pour fournir le liquide de lavage collecté dans le réservoir de lavage à l'au moins une buse de lavage, et dans lequel, en outre, un système d'évacuation de la saleté associé à l'au moins un système de lavage est fourni, dans lequel un écran de couvercle de réservoir est associé au système d'évacuation de la saleté et est configuré pour séparer les particules de saleté du liquide de lavage pulvérisé qui s'écoule par gravité dans le réservoir de lavage, dans lequel le système d'évacuation de la saleté comprend une zone de collecte de la saleté disposée au moins partiellement dans le réservoir de lavage pour collecter les particules de saleté séparées du liquide de lavage à l'aide de l'écran du couvercle du réservoir, et dans lequel, en outre, un système d'évacuation de la saleté relié fluidiquement à la zone de collecte de la saleté est prévu, au moyen duquel la zone de collecte de la saleté peut être vidée, en particulier selon les besoins, dans lequel le dispositif de commande (36) est configuré pour activer et/ou désactiver le système d'évacuation de la saleté et, en particulier, une pompe d'évacuation de la saleté associée au système d'évacuation de la saleté, de préférence automatiquement et, plus préférablement, en option automatiquement, en fonction du niveau de chargement établi, en particulier moyen, du dispositif de transport (2) et, éventuellement, avec un délai.

5. Lave-vaisselle à transporteur (1) selon l'une des revendications 1 à 4,
dans lequel le dispositif de détection du chargement du dispositif de transport (2) comprend un système de caméra disposé au-dessus, au-dessous ou latéralement par rapport au dispositif de transport (2) et configuré pour enregistrer l'au moins une image d'une zone du dispositif de transport (2), de préférence en continu ou à des moments et/ou événements spécifiés ou spécifiables au préalable, dans lequel un dispositif d'évaluation est en outre prévu, configuré pour évaluer et établir si, au moment de l'enregistrement de l'image, des zones exemptes de vaisselle sont présentes dans la zone du dispositif de transport (2) et/ou quel est le niveau de chargement du dispositif de transport (2).

6. Lave-vaisselle à transporteur (1) selon l'une des revendications 1 à 5,
**caractérisé en ce que**
le lave-vaisselle à transporteur (1) comprend un dispositif de commande (36) configuré pour émettre un message, en particulier un message d'erreur ou d'avertissement, en particulier à l'intention du personnel de lavage affecté au lave-vaisselle à transporteur (1) et/ou de l'opérateur du lave-vaisselle à transporteur (1) s'il est établi par le dispositif de détection d'un chargement du dispositif de transport (2) qu'un niveau de chargement actuel ou un niveau de chargement du dispositif de transport (2) calculé en moyenne sur une période de temps préalablement spécifiée ou spécifiable est inférieur à un niveau de chargement du dispositif de transport (2) préalablement spécifié ou spécifiable.

7. Lave-vaisselle à transporteur (1) selon l'une des revendications 1 à 6,
**caractérisé en ce que**
le lave-vaisselle à transporteur (1) comprend un dispositif de commande (36) configuré pour établir une évolution chronologique du chargement du dispositif de transport (2) avec de la vaisselle à transporter dans les zones de traitement du lave-vaisselle à transporteur (1) et/ou pour créer une statistique concernant le niveau de chargement du dispositif de transport (2).

8. Lave-vaisselle à transporteur (1) selon la revendication 7, dans lequel le dispositif de commande (36) est en outre configuré, en fonction de l'évolution chronologique établie et/ou en fonction de la statistique créée, pour générer un message correspondant et/ou pour le transmettre en particulier à l'opérateur du lave-vaisselle à transporteur (1), dans lequel le message contient de préférence une recommandation pour un fonctionnement optimisé du lave-vaisselle à transporteur (1), en particulier, en ce qui concerne l'efficacité du nettoyage.

9. Procédé de fonctionnement d'un lave-vaisselle à transporteur (1) selon l'une des revendications 1 à 8
dans lequel le procédé comprend les étapes de procédé suivantes :
- pendant une phase d'observation au cours d'une période d'observation relative à une équipe de lavage ou à une journée de lavage du lave-vaisselle à transporteur (1), une évolution chronologique du niveau de chargement du dispositif de transport (2) établi par le dispositif de détection d'un chargement du dispositif de transport (2) est établie et, sur la base de l'évolution chronologique établie, un schéma ou une régularité est dérivé ; et/ou
- au cours d'une phase d'observation sur une période d'observation relative à une équipe de lavage ou à une journée de lavage du lave-vaisselle à transporteur (1), une statistique est créée concernant l'évolution chronologique du niveau de chargement du dispositif de transport (2).

10. Procédé selon la revendication 9,
dans lequel, en fonction de l'évolution chronologique établie et/ou en fonction de la statistique créée, un message correspondant est généré et/ou transmis en particulier à l'opérateur du lave-vaisselle à transporteur (1), dans lequel le message contient de préférence une recommandation pour un fonctionnement optimisé du lave-vaisselle à transporteur (1), en particulier, en ce qui concerne l'efficacité du nettoyage.

11. Procédé selon la revendication 9 ou 10,
dans lequel un message d'erreur ou d'avertissement est transmis, en particulier, au personnel de lavage affecté au lave-vaisselle à transporteur (1) et/ou à l'opérateur du lave-vaisselle à transporteur (1) **s'il** est établi que le niveau de chargement établi, en particulier moyen, du dispositif de transport (2) tombe en dessous **d'un** niveau de chargement préalablement spécifié ou spécifiable.
